(19) Europäisches Patentamt
European Patent Office
Office européen des brevets

(11) **EP 4 404 158 A1**

(12) **EUROPEAN PATENT APPLICATION**
published in accordance with Art. 153(4) EPC

(43) Date of publication:
**24.07.2024 Bulletin 2024/30**

(21) Application number: **21956981.1**

(22) Date of filing: **09.12.2021**

(51) International Patent Classification (IPC):
***G07F 19/00*** *(2006.01)*

(52) Cooperative Patent Classification (CPC):
**G06Q 20/38; G07F 19/00**

(86) International application number:
**PCT/CL2021/050118**

(87) International publication number:
**WO 2023/039685 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2021 CL 20212412**

(71) Applicant: **Ader, Sergio**
**Las Condes (CL)**

(72) Inventor: **Ader, Sergio**
**Las Condes (CL)**

(74) Representative: **Herrero & Asociados, S.L.**
**Edificio Aqua.**
**Calle Agustín de Foxá 4-10**
**28036 Madrid (ES)**

(54) **AUTOMATIC CURRENCY EXCHANGE DEVICE AND METHOD**

(57)    This invention relates to a device for automatically exchanging currency in an exact way which includes bills and coins and which comprises a box-type cabinet (1) (totem) with a rectangular base and "H" height, the outer front part arranged for the user comprising; a touch screen (2), a video camera (3), an identification reader (4), a currency deposit slot (5), a bill dispenser (6), a coin dispenser (7) and a slot for the ejection of a printed receipt (8) of the transaction. Said device (1) incorporates an antenna (A) for internet signal and connection, a maintenance door (9) and an intruder alarm (10) which comprises a single receiving vault (5r) for storing bills or currencies, a container module (6c) that incorporates five vaults (g1) to (g5) containing bills of the base nationality, and a coin container (7c). The invention also relates to a method.

FIG. 3

EP 4 404 158 A1

**Description**

DESCRIPTION

The present invention relates to a device and the method embodied therein, for a user to automatically exchange currencies or coins of different origin or nationality.

In today's globalized world, it is quite normal that, in different countries, some businesses directly accept the exchange of currency or coins from tourists or foreign visitors. A common case is the acceptance of the "dollar" currency, where the equivalent value of one dollar is directly applied to the local currency.

However, when a person travels to a country other than his/her country of origin, he/she is confronted with the need to exchange the currencies or coins valid in his/her country, for currencies or coins valid in the country visited. For instance, if he/she travels from Chile to Argentina, he/she will have to exchange Chilean pesos for Argentine pesos, considering the prevailing exchange rate at that specific moment, that is, he/she will have to consider that one Chilean peso is equivalent to a certain number of Argentine pesos.

**Field of application**

The field of application of the automatic currency exchange devices is focused to be installed mainly at airports in different countries around the world and may also be in other places such as shopping centers, tourist centers, fairs, exhibitions, congresses, among others.

**Technical problem**

In all countries of the world, in order to exchange currency, there are foreign exchange offices operated by individuals, i.e., the transaction is carried out in person, on a person-to-person basis.

This invention provides a device for automatic exchange of currencies of different origin, delivering exact amounts equivalent to the currency of exchange, including bills and coins. The device replaces traditional exchange offices and allows users to have an automatic, secure, and strategically located means, like airports, for the exchange of foreign currencies.

**State of the art**

Currently, there are many types of automated teller machines (ATMs) that operate in a basically similar way, but it should be considered that the existing ATMs available to the public, in general and due to their high level of complexity, are not equipped to dispense coins, since this function implies a very high and demanding level of accuracy, so that almost all ATMs available in the world are only normally adapted to withdraw money in bills and according to pre-established amounts.

There are many documents and patents related to ATMs, but which differ from the method embodied in this invention, such as the following patents:

201601059 refers to "a sheet-type media deviation correction device and an ATM, the sheet-type media deviation correction device comprises an upper support plate, a lower support plate, a set of front guide wheels, a front end position sensing element, a side edge position sensing unit, a deflection correction assembly and a delivery assembly, the deflection correction assembly comprises a belt and a pair of belt pulleys, the delivery direction of the belt is perpendicular to the side edge of the upper support plate of the lower support plate, the delivery assembly comprises a pair of delivery wheels, the delivery direction of the delivery wheels is perpendicular to that of the belt, the belt is used to deliver a sheet-type medium to the edge of the belt so that it is aligned with the side edge of the support plate, thus achieving the purpose of deviation correction when the side edge position sensing unit detects that the sheet-type medium has been corrected, the delivery assembly is actuated to deliver forward and continuously the sheet-type medium, the side edge detection position unit is arranged to detect whether the sheet-type media has been corrected, so that the problem of insufficient correction of the deviation to excessive correction of the deviation is avoided."

201602712 refers to a latch system, for mechanically or electromagnetically locking and unlocking ATM doors such as cabinets or shielded furniture against theft, as a means of reinforcement to improve the guarantee against theft, characterized in that it is formed by an outer casing, consisting of a main body, which is provided with lateral perimeter holes, an upper base also provided with equidistant upper holes and a lower base cut in the shape of a "u"; furthermore, said casing has a rear wall, which has lateral perimeter flanges with holes which serve to fix said rear wall to the main body, thus forming the casing; it also presents in its interior a longitudinal "U"-shaped sleeve, which serves as a guide for a locking and unlocking bar or latch, which presents holes in the upper equidistant plant, where a handle is fixed through a top cover with equidistant holes, and which covers the upper zone of the housing of the latch system; the lock or locking and unlocking bar of the latch system fits into a hollow base or bottom piece, which is embedded in the floor and in front of the door of the ATM or shielded cabinet, or in the place that requires locking.

Patent VN 1200605213 refers to a transmission linkage device consisting of: a bill plate, a cover plate, a transmission mechanism, and an actuator mechanism. The first actuator is mounted on the stacker and is adapted to rotate the stacker. The second drive unit and a spring are mounted on the visor, and the second actuator is adapted to drive the visor to rotate. The torque limiter is mounted on the first drive unit. The one-way bearing is mounted on the second drive unit. The drive linkage can prevent customers from placing bills in the wrong place when depositing money and can also prevent problems with internal structures such as bill separators, stacking of bills exposed with propeller wheels blocked by foreign objects or damaged by other causes.

Patent VN 1199700843 provides a system and method for the transfer of cash or a fully automatic bank transfer using electronic technology between a sender and a receiver. This system, consisting of a receiving station to receive the specified amount of money to be transferred electronically, a remittance account and a security code of the sender, a central station for the specified amount of money to be transferred and a secure code in a record of the central station, and the sending station to receive the payee's entry corresponding to the specified amount transferred and the security code, to issue the recorded amount and the security code to the central station to compare with the information maintained in the central station's file and dispense to the receiver an amount equal to the specified amount without requiring the receiver to have a card to activate the transmitter.

Patent VN 1200800385 provides a method and device for a credit and debit card transaction terminal with processor, display, and memory. The card reader is configured to read data stored on portable memory devices. The operator interface is created by the operator interface program and is executable by the processor. The operator interface can be displayed on the screen depending on the operator's language. The client interface is created by the client interface program and executed by the processor. The client interface can be displayed in the client's language. The language recognition module is stored in memory and can be executed on the processor. The language recognition module is configured to select the operator language and select the client language that can be displayed to the operator and the client respectively. The operator language and the client language are selected from the languages stored in this module. The operator language and the client language are different.

**Brief description of the figures**

**Fig. 1** shows a front elevation diagram of an example of the automatic currency exchange device.

**Fig. 2** shows a diagram of the elements contained internally in the device.

**Fig. 3** shows three states of the device display in operation.

**Detailed description of the invention**

The present invention relates to a device and the method incorporated therein for a user to automatically exchange foreign currencies or coins of different origin or nationality.

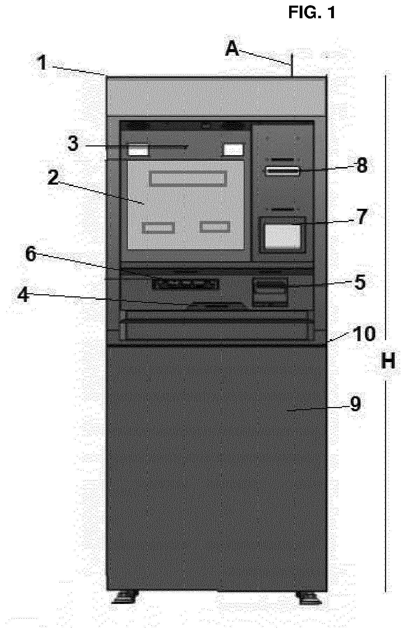

**Fig. 1** shows in front elevation, an example of the device as a means for foreign currency exchange. The device is a box-type cabinet (1) (totem) with a rectangular base and height "H", for example 2 meters which, in the outer front part arranged for the user, comprises; a touch screen (2), a video camera (3), an identification reader (4), a foreign currency receiver (5), a bill dispenser (6), a coin dispenser (7) and a printing output (8) for currency exchange operation receipt. The Device (1) incorporates an antenna (A) for internet signal and connection, a maintenance door (9) and an intruder alarm (10).

The device is prepared to exchange four types of currencies, for example, if exchange to Chilean pesos is required, the currency receiver (5) is prepared to receive bills of four types; American dollars (USD), euros (EUR), Argentine pesos (ARS) and Brazilian reals (BRL). The four currencies are captured and accepted by the receiver (5) in any order, randomly, regardless of nationality of origin or value.

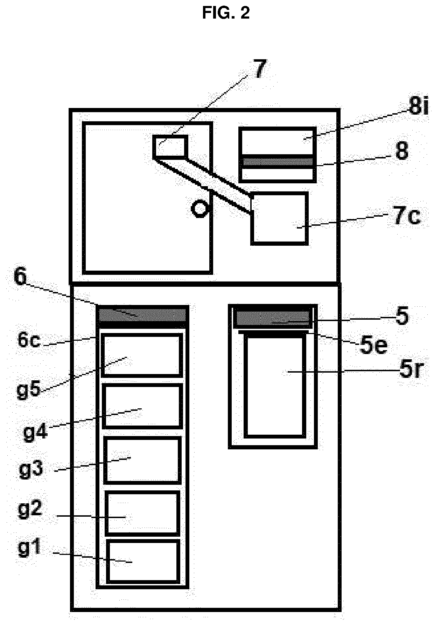

**Fig. 2,** shows a diagram of the elements contained internally in the device, where the currency receiver (5) is connected with a receiving vault (5r) for the storage of said bills or currencies, where the currencies are all stacked in the same receiving vault (5r), according to their order of entry, incorporates a means of bill identification (5e) such as a scanner, which identifies the origin and value of the bill entered; the bill dispenser (6) is connected to a container module (6c) that incorporates five vaults containing bills of the base nationality, said vaults are arranged one above the other and from bottom to top with bills of lowest to highest value respectively of each type or face value; in the example; the vault (g1) with bills of one thousand pesos, vault (g2) with bills of two thousand pesos, vault(g3) with bills of five thousand pesos, vault (g4) with bills of ten thousand and vault (g5) with bills of twenty thousand pesos; the printing output (8) of the currency exchange operation receipt is internally connected to a receipt printer (8i).

The coin dispenser (7) is connected to an internal coin container (7c), comprising coin sorting compartments of four nominal values, for the example of Chilean pesos (CL), for coins of 500, 100, 50 and 10 Chilean pesos (CL).

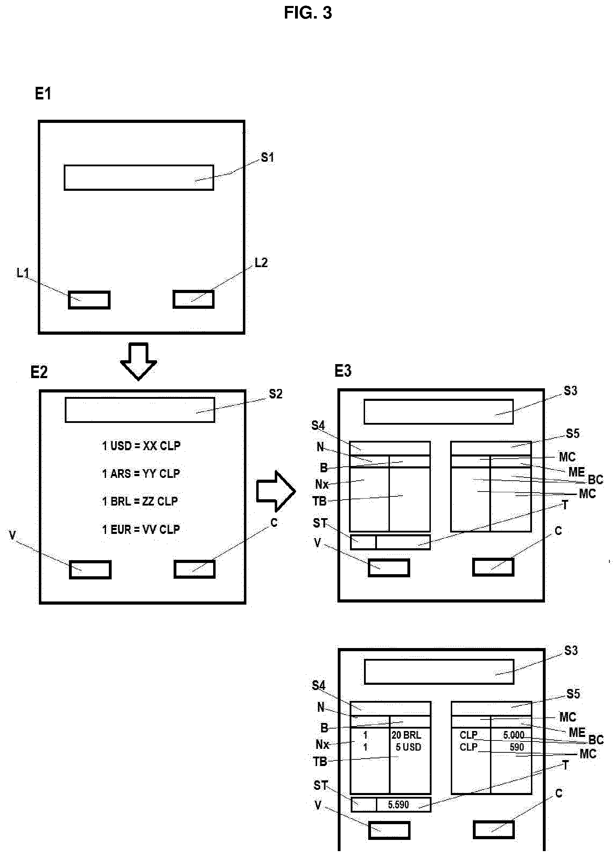

**Fig. 3** shows three states of the touch screen (2) of the device in operation with three steps of the method for currency exchange, where all the user's interaction with the device (1) is done through said screen (2).

To carry out the operation, the user must press the buttons shown on the screen (2), following the sequential steps below:

The first step or state **E1,** displays a first "welcome" message (S1) and shows the option to choose between two languages (L1) and (L2). For example, you can select (L1) "SPANISH" or (L2) "ENGLISH".

The second step or state **E2,** displays a second message (S2) where the user is requested, optionally, to position the passport or ID card in the identification reader (4), the user can press the return key (V) or continue (C); when pressing the continue key (C) the display shows the exchange rate of four currencies accepted by the device to exchange them to the base currency. In the example, the base currency is the Chilean peso (CLP) and shows the unit exchange value:

$$\text{One dollar} = 1 \text{ USD} = \text{XX CLP}$$

$$\text{One Argentine peso} = 1 \text{ ARS} = \text{YY CLP}$$

$$\text{One real} = 1 \text{ BRL} = \text{ZZ CLP}$$

$$\text{One euro} = 1 \text{ EUR} = \text{VV CLP}$$

If the client is satisfied with the exchange rate presented and wishes to continue with the transaction, he/she must press the "CONTINUE" button (C).

The third step or state **E3** shows a third message (S3) where the user is requested to enter the currency bills to be traded or exchanged, then a box or menu for visual control of the operation appears for the user, where two boxes are observed on the screen (2); a left box (S4) indicating accepted bills and a right box (S5) indicating the eligible currency; In the left box (S4) appears the quantity (N) of one or more types of bills (B) accepted and the quantity (Nx) of said types of bills and their amounts or values (TB), congruently in the right box (S5) appears the currency of exchange (MC) and the equivalent amounts (ME) in the base currency for the exchange bill(s) (BC) and the exchange coins (MC) of said currency.

**Fig. E4,** shows an example of application to exchange (20 BRL) twenty Brazilian reals plus (5 USD) five US dollars for a bill of five thousand Chilean pesos (CLP $5,000. -) plus, five hundred and ninety Chilean pesos in coins (CLP $590. -), according to the exchange rate of each currency, prevailing at the time of the operation.

The bills must be placed one by one in the currency vault (5), ideally stretched out so that the reader accepts them without problems. The system automatically recognizes the type of currency entered and checks the security points present in each type of bill. If it is accepted, it will be registered on the screen (left box (S4)) and will calculate the money you will receive for the exchange (right box (S5)). Once you have finished entering the bills, you must press the "CONTINUE" button (C) so that the device (1) dispenses the money previously displayed together with a ticket with the details of the exchange.

The procedure for replenishing or loading base money for foreign exchange involves the following steps:

1- Deactivate the intruder alarm (10).
2- Open the maintenance door (9) (Only with the use of a security key).
3- Open the coin dispenser (7) (Only with the use of a security key).
The coins are loaded from the top of the dispenser, and the dispenser classifies them according to their denomination, accepting four types of coins (For example, Chilean coins (CLP) of $500, $100, $50 and $10).
4- Open the bill vaults (6c) (Only with the use of a security key).
Remove the lock from each vault (g1) to (g5), remove the rail, open, and then deposit the bills of the corresponding denomination.
5- Enter to the menu of administration of the currency exchange system and register the amount of each denomination loaded in the machine.

6- Close the maintenance door (9).

7- Activate the intruder alarm (10).

The procedure for collecting foreign currency deposited into the device (1) includes the following steps:

1- Deactivate intruder alarm (10).

2- Open the maintenance door (9) (Only with use of a security key).

3- Remove the currency deposit and take out the bills stored in the receiving vault (5r). The currencies are all stacked in the same container (receiving vault (5r)) according to their order of entry.

4- Enter to the menu of administration of the currency exchange system and reset counters.

5- Close the maintenance door (9).

6- Activate the intruder alarm (10).

**Claims**

1. - A device for automatic exchange of foreign currencies of different origin in an accurate manner including bills and coins, which consists of a box-type cabinet (1) (totem) with a rectangular base and "H" height that in the outer front part arranged for the user comprises: a touch screen (2), a video camera (3), an identification reader (4), a currency vault (5), a bill dispenser (6), a coin dispenser (7) and a printing output (8) for the currency exchange operation receipt; said device (1) incorporates an antenna (A) for internet signal and connection, a maintenance door (9) and an intruder alarm (10) **CHARACTERIZED in that** the currency vault (5) is prepared for four currencies that are captured and accepted by the currency vault (5) in any order, in a random manner and comprises a single receiving vault (5r) for the storage of said bills or currencies, which are all stacked in said receiving vault (5r) according to their order of entry; incorporates a currency or bills identifying means (5e); the bill dispenser (6) internally comprises a container module (6c) incorporating five vaults (g1) to (g5) that contain bills of the base nationality, said vaults being arranged one above the other and from bottom to top with bills of lowest to highest value respectively of each type and value; the coin dispenser (7) internally comprises a coin container (7c) with sorting compartments for coins of four nominal values.

2. - A method of operating the device for automatic exchange of currencies of different origin in an accurate manner involving bills and coins of claim 1, **CHARACTERIZED in that** it comprises the following steps:

   - operate touch screen (2);
   - select language (L1) or (L2) and press (C) to continue or (V) to return;
   - optionally, position ID on the identification reader (4) and press (C) or (V);
   - recognize the exchange rate for the four currencies effective at the time of the operation, press (C) to continue or (V) to return;
   - enter bills into the currency vault (5) randomly;
   - observe on the touch screen (2) a left box (S4) indicating accepted bills and a right box (S5) indicating the eligible currency; in the left box (S4) appears the quantity (N) of one or more types of bills (B) accepted and the quantity (Nx) of said types of bills and their amounts or values (TB), congruently in the right box (S5), appears the currency of exchange (MC) and the equivalent amounts (ME) in the base currency for the bill(s) of exchange (BC) and the coins of exchange (MC) of said currency, press (C) to continue or (V) to return;
   - observe on touch screen (2) in the left box (S4) the calculation of the money entered and what you will receive for the exchange in the right box (S5), press (C) to continue or (V) to return;
   - remove the bills from the bill dispenser (6) and the coins from the coin dispenser (7) and;
   - remove the operation receipt from the printing output (8).

**FIG. 1**

**FIG. 2**

## FIG. 3

**E1**

S1

L1            L2

**E2**                                        **E3**

S2                                            S3

1 USD = XX CLP                S4              S5
                              N               MC
1 ARS = YY CLP                B               ME
                              Nx              BC
1 BRL = ZZ CLP                TB              MC
                              ST              T
1 EUR = VV CLP        C
                              V               C
V

                                              **E3 (continued)**

                                              S3

                              S4              S5
                              N               MC
                              B      1   20 BRL      CLP   5.000   ME
                              Nx     1   5 USD       CLP   590     BC
                              TB                                   MC
                              ST                                   T
                              V          5.590               C

## INTERNATIONAL SEARCH REPORT

| International application No. |
| --- |
| PCT/CL2021/050118 |

| A. | CLASSIFICATION OF SUBJECT MATTER |
| --- | --- |

(CIP) G07F19/00 (2022.01)

According to International Patent Classification (IPC) or to both national classification and IPC

| B. | FIELDS SEARCHED |
| --- | --- |

Minimum documentation searched (classification system followed by classification symbols)

(CIP) G07F19; G06Q20/38

Documentation searched other than minimum documentation to the extent that such documents are included in the fields searched

Electronic data base consulted during the international search (name of data base and, where practicable, search terms used)

EPOQUE, DERWENT INNOVATION, GOOGLE, ESPACENET, INAPI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | GB 2376124 A (LAWRENCE, S.) 04 December 2002. Abstract; pag. 4, 7; fig. 1 , 2. | |
| A | JP 2017173898 A (GLORY KOGYO KK) 28 September 2017. Abstract; [024], [031], [032], [041], [044], [050], [065], [066]; fig. 2. | |
| A | US 20090063344 A1 (TRAVIS, R.) 05 marzo 2009. [009], [020]-[022]; claim. 1 ; fig. 3. | |
| A | GB 2476065 A (NISENBLAT, P.) 15 June 2011. Abstract; pag. 3-5, 7; fig. 2. | |

| ☐ Further documents are listed in the continuation of Box C. | ☒ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 April 2022 | 16 May 2022 |

| Name and mailing address of the ISA/ | Authorized officer |
| --- | --- |
| INAPI | |
| Facsimile No. | Telephone No. |

Form PCT/ISA/210 (second sheet) (January 2015)

INTERNATIONAL SEARCH REPORT
Information on patent family members

International application No.

PCT/CL2021/050118

| | | | |
|---|---|---|---|
| GB2376124A | 04-12-2002 | WO02095696A1 | 28-11-2002 |
| JP2017173898A | 28-09-2017 | None | |
| US2009063344A1 | 05-03-2009 | None | |
| GB2476065A | 15-06-2011 | None | |

Form PCT/ISA/210 (patent family annex) (January 2015)

**REFERENCES CITED IN THE DESCRIPTION**

**Patent documents cited in the description**

- VN 1200605213
- VN 1199700843
- VN 1200800385